# EUROPEAN PATENT SPECIFICATION

(11) **EP 1 816 877 B1**
(45) Date of publication and mention of the grant of the patent: **02.12.2009**
(21) Application number: 06722257.0
(22) Date of filing: 05.04.2006
(51) Int. Cl.: H04W 36/14

(54) **A HANDOFF METHOD OF CIRCUIT SWITCHING CALL CONNECTION**
HANDOFF-VERFAHREN EINER LEITUNGSVERMITTELTEN ANRUFVERBINDUNG
PROCEDE DE TRANSFERT DE CONNEXION D'APPEL PAR COMMUTATION DE CIRCUIT

(30) Priority: 05.04.2005 CN 200510063167
(43) Date of publication of application: 08.08.2007
(73) Proprietor: Huawei Technologies Co., Ltd., Longgang District, Shenzhen Guangdong 518129 (CN)
(72) Inventor: ZHU, Dongming Huawei Administration Building, Guangdong 518129 (CN)
(74) Representative: Kreuz, Georg Maria
(86) International application number: PCT/CN2006/000605
(87) International publication number: WO 2006/105732

(56) References cited:
- EP-A- 1 182 900
- EP-A- 1 370 056
- EP-A- 1 585 355
- WO-A1-2004/004373
- CN-A- 1 115 165
- US-A1- 2002 110 104
- US-A1- 2002 132 638
- US-A1- 2004 156 394
- US-A1- 2004 192 294
- SINNREICH H ET AL: "Internet Communications Using SIP, PASSAGE" INTERNET COMMUNICATIONS USING SIP : DELIVERING VOIP AND MULTIMEDIA SERVICES WITH SESSION INITIATION PROTOCOL, NEW YORK : JOHN WILEY & SONS, US, 2001, pages 127-130, XP002312305 ISBN: 0-471-41399-2

## Description

### Field of the Invention

The present invention relates to communication technologies, and more particularly, to a method and a system for performing a transfer for a Circuit Switched (CS) call connection.

### Background of the Invention

Along with popularization of the Internet, a simplex voice communication mode can no longer satisfy subscribers' demands, and what people need is a novel multimedia communication mode. Therefore, an Internet Protocol (IP) trend of mobile communication network and fixed communication network, as well as combination of the Internet and a telecommunication network, has unquestionably become the acknowledged direction of future network in the industry. To satisfy more and more demands for applications of IP multimedia, the Third Generation Partnership Project (3GPP), which is responsible for defining the specifications of Wideband Code Division Multiple Access (WCDMA) system, has thereof introduced an IP Multimedia Subsystem (IMS) with all-IP network architecture in the Release 5 (R5) on the basis of an existing Packet Switched (PS) domain. The IMS employs the PS domain as a bearer channel for the transmission of its upper level control signaling and media data, adopts Session Initiation Protocol (SIP) as the IMS service control protocol, and provides abundant of multimedia services for subscribers by separating the service control and the bearer control, and by utilizing the characteristics of the SIP, i.e., simple, extensible and convenient for media combination. The IMS architecture comprehensively solves all the crucial operability problems for providing multimedia service over IP, such as roaming charging, guarantee of Quality of Service (QoS) and security, therefore the architecture and corresponding idea are recognized by the industry. Both 3GPP2, which is responsible for defining the specifications of Code Division Multiple Access 2000 (CDMA 2000) system, and Telecommunications and Internet converged Services and Protocols for Advanced Networking (TISPAN), which is responsible for defining the specifications of the Next Generation Network (NGN) of fixed networks, define corresponding IP multimedia network architecture and service system based on and with reference to IMS model defined by 3GPP. In other words, the IP multimedia systems defined by different standard organizations have consistent system architecture.

Wireless Local Area Network (WLAN) is a convenient network which is suitable for short distance data transmission. Since the WLAN works on the unlicensed spectrum, no costly license fee is needed and services can be provided for subscribers with a lower fee. However, the WLAN has its limitation on access rate and ability of adapting to environment, which makes it be mutually complementary to the Third Generation (3G) network. Therefore the interworking of the WLAN and the 3G network has gradually become a focus of the industry. The interworking between the WLAN and the WCDMA system is one of the work items introduced by the 3GPP in the Release 6. Within the work item, the issue of the network architecture and signaling interaction for the interworking between the WLAN and the 3G is under research, and six different scenarios with increasing difficulties are analyzed as well. In scenario 3, operators are required to extend the Packet Switched (PS) domain services in a 3G system to the WLAN network, including location services, IMS services, instant messaging services, and presence services, while in scenario 4 and scenario 5, service continuity is further required when a change of access system occurs, i.e., subscribers may be aware of the change of the access system, whereas the service established previously need not be re-established. Along with development in network construction and progress in research, accessing the IMS through the WLAN to provide a Voice over IP (VoIP) service and providing the voice call continuity between the IMS and CS domain has been put on the agenda.

On the one hand, to provide the VoIP service by accessing the IMS via the WLAN and to provide the voice call continuity between the IMS and the CS domain refer to that, when moving out of the hot-spot coverage area of the WLAN and thus losing the network connection during a process of enjoying the VoIP service by accessing the IMS via the WLAN using a multi-mode terminal, a subscriber can access the CS domain via a WCDMA network which has continuous coverage or other mobile networks and continue the conversation with a remote subscriber; or, when entering the hot-spot coverage area of the WLAN during a process of communicating with a remote subscriber in the CS domain, a subscriber can continue the conversation by performing a transfer for the call connection to a mode in which the subscriber terminal accesses the IMS via the WLAN so as to enjoy the service with lower fee or avoid the impact of indoor attenuation of WCDMA network signals on conversation quality. In other words, it is required to support the voice call transfer between different access modes during a CS call and maintain the continuity of the conversation.

On the other hand, since a dual-mode terminal is costly, and it is also possible that the conversations are not able to be continued due to the problems of the terminal itself, such as the case in which the terminal's battery runs out, the above transfer for the call connection may also be implemented between two different terminals of a subscriber, that is to say, it is also necessary to provide a capability of transferring a voice call between terminals during a CS call while maintaining conversation continuity.

Such capability will enable a subscriber to perform a voice call transfer between different terminals or access modes during a CS call while maintaining the conversation with the remote subscriber, thereby improving the subscriber's service experience and promoting the development of the network.

However, although the 3GPP has addressed the above issue by a related work item to find a solution, no specific solution has been put forward till now.

In addition, in further consideration of the above demands for performing a transfer of an ongoing voice call across terminals while maintaining continuity of the conversation, more application scenarios emerge. For example, after a subscriber establishes a voice call with a remote subscriber through a mobile phone on the road, he may wish to perform a transfer of the ongoing voice call to a fixed telephone at home when arriving at home, so as to enjoy a favorable charging rate or to free his hands. In contrast, after a subscriber establishes a voice call with a remote subscriber via a fixed telephone at home, he may wish to perform a transfer of the ongoing voice call to a mobile phone when he has to go out, so as to continue the conversation with the remote subscriber. That is to say, besides the above demands for performing a transfer of the ongoing voice call between the IMS and the CS domain of a mobile network, demands for performing a transfer of the ongoing voice call between the CS domain and various Circuit Switched networks as well as between different Circuit Switched networks need to be satisfied. The different Circuit Switched networks herein include the Circuit Switched domain of the Public Land Mobile Network (PLMN) based on the GSM, or the WCDMA, or the CDMA IS-95 or CDMA 2000 1X, as well as a Public Switched Telephone Network (PSTN); the IMS mentioned above includes an IP multimedia network as defined by different standard organizations.

EP-A-1585355 (2005-10-12) reveals a method for establishing a call connection between an associated phone and a called party. Having received a call initiated by a mobile terminal which has association relationships with other communication terminals in a network, the network determines a communication terminal as an associated terminal according to the relationship; then the network initiates calls to a called terminal and the associated terminal, respectively; then having received answer messages from the called terminal and the associated terminal, the network establishes connection between the associated terminal and the called terminal.

EP-A-1182900 (2002-02-27) reveals a handover of wireless calls between systems supporting circuit and packet call models by enhancing a packet wireless system to provide translation between circuit and packets call model. A media gateway, a media gateway control function, and an associated call state control function, cooperate to emulate the behavior of a circuit wireless system, so that when interoperating with conventional circuit systems, the packet system appears to be another circuit wireless system.

### Summary of the Invention

Embodiments of the present invention provide a method and a system for performing a transfer for a Circuit Switched (CS) call connection so as to implement the voice call transfer between different terminals or access modes while maintaining continuity of the call. The different CS networks here include: the CS domain of a Public Land Mobile Network (PLMN) based on a Global System for Mobile communications (GSM), or on a Wideband Code Division Multiple Access (WCDMA) system, or on a CDMA IS-95 or CDMA 2000 1X system, as well as a Public Switched Telephone Network (PSTN); and the IMS includes an IP multimedia network as defined by various standard organizations.

Meanwhile, in comprehensive consideration of the advantages of adopting an Intelligent Network (IN) architecture to introduce new services in the CS network and the requirement for performing such an voice call transfer on the capability of exchanges, the present invention provides two different implementing modes including a solution based on the IN architecture and another solution directly implemented in the exchanges, respectively.

A method for performing a transfer for a Circuit Switched (CS) call connection includes:
performing, by a CS network service control entity, interactions of service triggering and service control with a CS network call control entity upon receiving a service triggering request, and instructing the CS network call control entity to proceed with call processing to establish an initial CS call connection between a transfer source connection point of a transfer side subscriber and a connection point of a remote subscriber via the CS network call control entity, wherein the CS network call control entity controls the call in a Call Party Handling, CPH, mode, and the service triggering request is sent by the CS network call control entity to the CS network service control entity after the CS network call control entity receives a call establishment request, from or pointing to the transfer side subscriber;
sending, by the CS network service control entity, an addressing number pointing to a transfer destination connection point of the transfer side subscriber to the CS network call control entity through an Initial Call Attempt message, instructing the CS network call control entity to establish a new call connection with the transfer destination connection point wherein the CS network call control entity
establishes the new call connection with the transfer destination connection point of the transfer side subscriber according to the addressing number contained in the Initial Call Attempt message upon receiving the Initial Call Attempt message issued by the CS network service control entity, and responding an Initial Call Attempt response;
instructing, by the CS network service control entity, the CS network call control entity to connect the new call connection established between the CS network call control entity and the transfer destination connection point to the initial CS call connection through operations of moving a call leg upon receiving the Initial Call Attempt response, so as to connect the transfer destination connection point with the connection point of the remote subscriber in the initial CS call connection; and
instructing, by the CS network service control entity, the CS network call control entity to remove the call connection with the transfer source connection point from the initial CS call connection and release the call connection between the CS network call control entity and the transfer source connection point by the operations of splitting the call leg and releasing the call leg, thereby maintaining continuity of conversation between the transfer side subscriber and the remote subscriber.

The transfer source connection point and the transfer destination connection point are two subscriber terminals of the transfer side subscriber accessing a CS network and an Internet Protocol Multimedia Subsystem (IMS) respectively; or the transfer source connection point and the transfer destination connection point are embodied in one subscriber terminal and access the CS network and the IMS respectively; and
the new call connection established between the CS network call control entity and the transfer destination connection point is an interworking call from the CS network to the IMS via a Media Gateway Control Function (MGCF)/IM-Media Gateway (IM-MGW).

The method further includes:
before the process of sending the addressing number pointing to the transfer destination connection point of the transfer side subscriber to the CS network call control entity,
obtaining, by the CS network service control entity, the addressing number pointing to the transfer destination connection point of the transfer side subscriber.

The process of obtaining the addressing number pointing to the transfer destination connection point of the transfer side subscriber includes:
sending, by the transfer source connection point, a transfer request to the CS network service control entity upon determining that current wireless signal strength of the network connection is lower than a preset value or determining that the transfer source connection point can not continue to work; or
sending, by the transfer source connection point, the transfer request to the CS network service control entity according to an instruction from a subscriber; and
obtaining, by the CS network service control entity, the addressing number pointing to the transfer destination connection point from the received transfer request.

The process of sending the transfer request to the CS network service control entity includes:
sending, by the transfer source connection point, the transfer request to the CS network service control entity in manner of Unstructured Supplementary Service Data (USSD); or
sending, by the transfer source connection point, the transfer request to the CS network service control entity through a Facility message.

The process of obtaining the addressing number pointing to the transfer destination connection point of the transfer side subscriber includes:
obtaining, by the CS network service control entity, the addressing number pointing to the transfer destination connection point of the transfer side subscriber from subscriber subscription information stored in the CS network service control entity upon determining that a transfer condition is met according to a pre-configured strategy.

The method further includes:
controlling, by the CS network service control entity, the CS network call control entity to play transfer prompt announcement to the transfer source connection point; or
sending, by the CS network service control entity, transfer prompt information to the transfer source connection point through a Notify message or a Facility message.

The process of obtaining the addressing number pointing to the transfer destination connection point of the transfer side subscriber includes:
receiving, by the CS network service control entity, a transfer related event notification from the transfer side subscriber, and obtaining the addressing number pointing to the transfer destination connection point of the transfer side subscriber from a transfer related event notification received.

The transfer related event notification includes:
the transfer related event notification sent from the transfer source connection point of the transfer side subscriber to the CS network service control entity in manner of USSD or through a Facility message; or
the transfer related event notification received by the CS network service control entity in manner of a Presence service subscription and notification.

The new call connection established between the CS network call control entity and the transfer destination connection point is established by the CS network call control entity in a process includes:
sending, by the CS network call control entity, a call establishment request message to the transfer destination connection point according to the addressing number pointing to the transfer destination connection point; and
the call establishment request message contains a called number with a special number prefix indicating that the call connection is a transferred call connection, or contains a signaling identification indicating that the call connection is a transferred call connection; and the method further includes:
   performing, by network entities involved in the call connection, the service collision handling at the terminating side, or charging optimization, or performing, by subscriber terminals involved in the call connection, ringing avoidance, according to the special number prefix or signaling identification during the process of establishing the new call connection between the CS network call control entity and the transfer destination connection point of the transfer side subscriber.

The process of establishing the new call connection further includes:
establishing an interworking call from the CS network to the IMS through an Media Gateway Control Function (MGCF) / IM-Media Gateway (IM-MGW);
transforming, by the MGCF, the special number prefix or signaling identification into an indication in the Session Initiation Protocol (SIP) signaling; and
the network entities involved in the call connection perform the service collision handling at the terminating side, or charging optimization, or subscriber terminals involved in the call connection perform ringing avoidance, according to the indication in the SIP signaling during the process of establishing the new call connection between the CS network call control entity and the transfer destination connection point of the transfer side subscriber.

The CS network service control entity is a Service Control Point (SCP) in an Intelligent Network (IN), and the CS network call control entity is a Service Switching Point (SSP) responsible for triggering IN services of the transfer side subscriber; or
the CS network service control entity and the CS network call control entity both are switching apparatus in which the transfer source connection point of the transfer side subscriber is currently located.

The service triggering request is sent by the CS network call control entity to the CS network service control entity according to Customized Applications for Mobile network Enhanced Logic (CAMEL) subscription information of the transfer side subscriber.

A system for performing a transfer for a Circuit Switched (CS) call connection, includes:
a CS network service control entity and a CS network call control entity; and
the CS network service control entity is adapted to perform interactions of service triggering and service control with the CS network call control entity upon receiving a service triggering request, and to instruct the CS network call control entity to proceed with call processing, send an addressing number pointing to a transfer destination connection point of the transfer side subscriber to the CS network call control entity through an Initial Call Attempt message, instruct the CS network call control entity to establish a new call connection with the transfer destination connection point, instruct the CS network call control entity to connect the new call connection established between the CS network call control entity and the transfer destination connection point to the initial CS call connection through operations of moving a call leg upon receiving the Initial Call Attempt response, so as to control the CS network call control entity to connect the transfer destination connection point with a connection point of a remote subscriber in an initial CS call connection, and instruct the CS network call control entity to remove the call connection with the transfer source connection point from the initial CS call connection and to release the call connection between the CS network call control entity and the transfer source connection point by the operations of splitting the call leg and releasing the call leg;
the CS network call control entity is adapted to send the service triggering request to the CS network service control entity after receiving a call establishment request from or pointing to the transfer side subscriber, controls the call in a Call Party Handling (CPH) mode, establish the initial CS call connection between the transfer source connection point of the transfer side subscriber and the connection point of the remote subscriber via the CS network call control entity; and establish a new call connection with the transfer destination connection point of the transfer side subscriber according to the addressing number contained in the Initial Call Attempt message upon receiving the Initial Call Attempt message issued by the CS network service control entity, and respond an Initial Call Attempt response, connect the transfer destination connection point with the connection point of the remote subscriber in the initial CS call connection, remove the call connection with the transfer source connection point from the initial CS call connection, and release the call connection between CS network call control entity and the transfer source connection point under the control of the CS network service control entity, thereby maintaining continuity of conversation between the transfer side subscriber and the remote subscriber.

The CS network call control entity is a Mobile Switching Center/Service Switching Point (MSC/SSP), and the CS network service control entity is a Service Control Point (SCP) in a Mobile Intelligent Network (IN).

The MSC/SSP is a Visited Mobile Switch Center/Service Switching Point (VMSC/SSP) in which a calling subscriber terminal is currently located in a targeted network manner, or a Gateway Mobile Switching Center/Service Switching Point (GMSC/SSP) obtaining a roaming number for a called subscriber terminal in the targeted network manner, or a dedicated MSC/SSP in an overlay network manner.

The CS network service control entity is a Service Control Point (SCP) in an IN, and the CS network call control entity is a Service Switching Point (SSP) responsible for triggering IN services of the transfer side subscriber; or
the CS network service control entity and the CS network call control entity both are switching apparatus in which the transfer source connection point of the transfer side subscriber is currently located.

The service triggering request is sent by the CS network call control entity to the CS network service control entity according to Customized Applications for Mobile network Enhanced Logic, CAMEL, subscription information of the transfer side subscriber.

To sum up, in accordance with an embodiment of the present invention, if the voice call transfer between different access modes or terminals is needed when a CS network subscriber is in a CS conversation, the CS network service control entity controls the CS network call control entity to establish a new call connection with the transfer destination connection point, then controls the CS network call control entity to connect the transfer destination connection point with the remote subscriber in the initial CS call connection; and finally, the CS network call control entity and the transfer source connection point at the transfer side release the call connection between them, such that the remote subscriber in the initial CS call connection can be connected to the transfer destination connection point at the transfer side after the transfer and continue the established conversation. Thereby, it could be finally implemented that the transfer side subscriber in the initial CS conversation performs a transfer of the call to a new connection point while the continuity of the conversation is still ensured.

### Brief Description of the Drawings

Figure 1 is a schematic diagram illustrating the Customized Applications for Mobile network Enhanced Logic (CAMEL) architecture in the CS domain of a Mobile IN.
Figure 2 is a flow chart illustrating signaling interaction in accordance with an embodiment of the present invention.

### Detailed Description of the Invention

The invention is hereinafter described in detail with reference to accompanying drawings and embodiments.

As described above, a voice call transfer needs to be provided between an IMS and various CS networks as well as between two different CS networks so as to fully utilize capabilities of different networks and thus provide subscribers with more flexible and abundant services. The different CS networks include: the CS domain of the Public Land Mobile Network (PLMN) based on the GSM, or the WCDMA, or the CDMA IS-95 or CDMA 2000 1X, as well as a Public Switched Telephone Network (PSTN); the IMS includes an IP multimedia network as defined by the different standard organizations mentioned above.

In accordance with embodiments of the present invention, when a CS network subscriber needs to perform a voice call transfer between different access modes or terminals during a CS call, the CS network service control entity controls the CS network call control entity to establish a new call connection with the transfer destination connection point, and then controls the CS network call control entity to connect the transfer destination connection point and the remote subscriber in the initial CS call connection; finally, the call connection between the CS network call control entity and the transfer source connection point of the transfer side subscriber is released, such that after the transfer, the remote subscriber in the initial CS call connection can be changed to connect with the transfer destination connection point of the transfer side subscriber, so as to continue the conversation with the transfer side subscriber, thereby the objective of performing a voice call transfer for the original CS call to a new call connection point and ensuring continuity of conversation at the same time can be achieved. The transfer source connection point and transfer destination connection point may be different terminals or the same terminal which accesses different communication networks.

The technical solution in accordance with embodiments of the present invention is hereinafter described with an example in which, when adopting mobile Intelligent Network architecture, a calling subscriber establishes a CS call with a remote subscriber in the CS domain via a multi-mode terminal, and performs a transfer from the CS access mode to the IMS access mode under the control of a Service Control Point (SCP). For the sake of clarity, a description of the IN on which the embodiment is based is given first.

The concept of the IN was put forward by American Bell Communication Inc. and American Technology Corporation in 1984, and was standardized by the Consultative Committee for International Telephone and Telegraphy (CCITT) in 1992. The IN is a system in which various new services can be generated and implemented quickly, conveniently, flexibly, economically and effectively. And the objective of the IN is to serve all types of the communication networks. In the CS domain, as the IN adopts the architecture in which a service control is separated from a call switching, no software upgrade is needed for different types of exchangers which may be developed by different manufacturers when new services are developed, thereby IN architecture has many advantages.

In the existing fixed IN, the Intelligent Network Application Protocol (INAP) defined by International Telecommunication Union Telecommunication Standardization Sector (ITU-T) is adopted in the interface between SCP and Service Switching Point (SSP), and the interface between SCP and Intelligent Peripherals (IP). The INAP is defined according to different phases of Capability Sets (CS) defined by ITU-T, and currently, the supported Capability Sets is IN CS2.

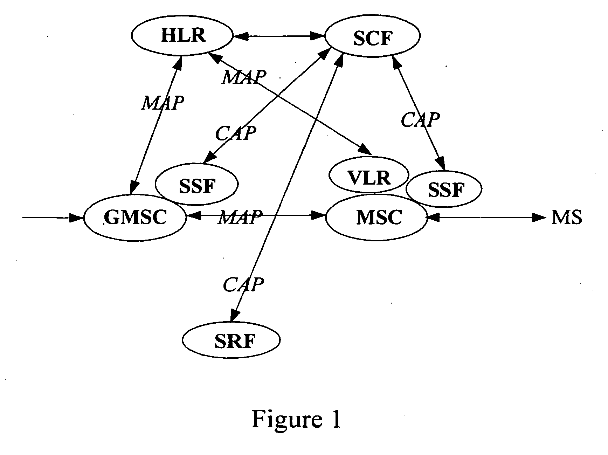

In GSM or WCDMA, the Customized Application for Mobile network Enhanced Logic (CAMEL) is introduced to provide IN services. The CAMEL is a mobile IN standard for providing mobile subscribers with IN services. According to the CAMEL, functional entities such as Service Control Function (SCF), Specialized Resource Function (SRF) and Service Switching Function (SSF) are introduced to the GSM network; and considering the characteristics of a mobile network and mobile subscribers, the functions of Mobile Switching Center (MSC)/Visitor Location Register (VLR), Gateway Mobile Switching Center (GMSC) and Home Location Register (HLR) of the original GSM network are enhanced, and the original Mobile Application Part (MAP) protocol is enhanced and extended, thereby providing mobile subscribers with IN services. Figure 1 shows the functional architecture for providing the CAMEL in a mobile network CS domain. As shown in Figure 1, the CAMEL service is provided by the combined utilizing of the CAMEL Application Part (CAP) and MAP, where the CAP is the communication protocol used in the interface among the SCF, the SSF and the SRF, while the MAP is the communication protocol used in the interfaces among the original mobile associated functional entities.

The CAMEL is defined by phases by the European Telecommunications Standards Institute (ETSI)/3GPP. Similar to the INAP, it is also defined according to the different phases of Capability Sets of the ITU-T. The currently published CAMEL standard has four phases: CAMEL 1, CAMEL 2, CAMEL 3 and CAMEL 4. The Capability Set supported by CAMEL 1 to CAMEL 3 is a subset of IN CS 2, with special parameters or messages of mobile network added. In CAMEL 4 defined in the 3GPP Release 5 (R5), the definition of a Call Party Handling (CPH) capability is added on the basis of adopting a call model consistent with that of the IN CS2, that is to say, the SCF entity is supported to control the operations of releasing, moving or splitting for call legs belonging to different call segments included in a call segment association. In other words, by adopting a half-call model, the CPH manages the calls as call legs which are relatively independent. Each call leg indicates an association between the network and an end subscriber, and one call leg or a plurality of interconnected call legs form a call segment. All the call legs in one call segment interconnect with each other so as to enable the corresponding subscriber of each call leg to communicate with each other. Furthermore, one or more call segments form a call segment association, which is managed by a dialogue between an SSF and an SCF. One call leg may move among all the call segments in the call segment association to which it belongs, in other words, the call leg may join a call segment and can participate in the conversation of the call segment, or may be split from a call segment to quit the conversation of the call segment. In addition, the CAMEL also adds the capability of supporting the SCF to control the SSF to initiate a call in a CS domain.

Similar to the descriptions above, a North America CDMA mobile communication system adopts the American National Standard Institute (ANSI) 41 D protocol. To support the IN services, the ANSI and the Telecommunications Industries Association/Electronic Engineers Association (TIA/EIA) define by phases a series of Wireless Intelligent Network (WIN) protocols based on the Capability Set 2, and then consolidate the defined WIN protocols within the ANSI 41E protocol, so as to make the ANSI 41 E protocol become a Core Network (CN) protocol totally based on IN.

It can be seen from the above descriptions that both the GSM or WCDMA CAMEL Mobile IN and the CDMA ANSI-41 WIN are derived from a fixed IN, which determines that their system architectures are basically the same. In addition, since the three IN protocols are all defined based on the IN Capability Set 2, although protocols for interacting between related entities in the three INs are different, the capabilities supported by them are basically equivalent, that is to say, a function provided in one IN based on the defined capability thereof may also be provided in the other two INs based on the corresponding capabilities.

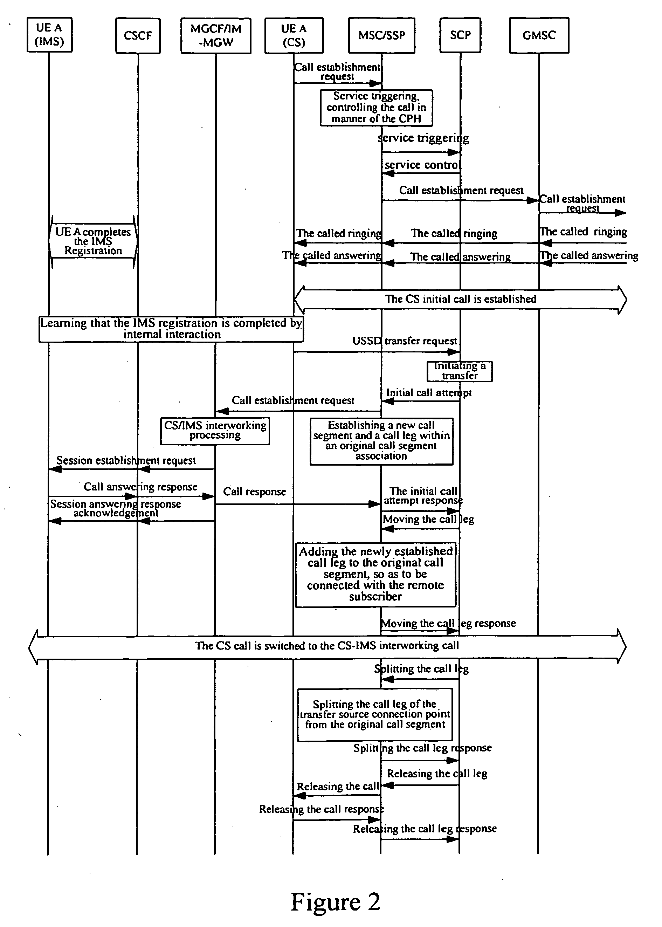

The embodiment of the present invention is described as follows. It is necessary for a subscriber to subscribe to the IN service in advance in the embodiment, that is to say, IN service subscription information shall be added to the CS subscription information of the subscriber, and the IN service subscription information includes Originating CAMEL Subscription Information (O-CSI) and Terminating CAMEL Subscription Information (T-CSI). The flow of signaling interaction in accordance with the embodiment is shown in Figure 2, where the SCP and the MSC/SSP correspond to the network entities of SCF and SSF in the CAMEL architecture, respectively.

The method in accordance with the embodiment is as follows.

Step 201: a calling subscriber terminal (UE A) establishes a CS call in a CS domain with a called subscriber terminal (UE B).

The process specifically includes the following: first, the UE A sends a call establishment request to the visited MSC/SSP in which UE A is located; upon receiving the call establishment request, the MSC/SSP obtains the calling party's subscription information corresponding to UE A from the VLR, sends a service triggering request to the appointed SCP according to the O-CSI in the subscription information, and controls the call according to the CPH mode, that is, manages the call as relatively independent call legs; upon receiving the service triggering request sent by the MSC/SSP, the SCP performs interaction with the MSC/SSP for performing triggering and service control, and after that, sends an instruction to the MSC/SSP to proceed with call processing; upon receiving the instruction, the MSC/SSP performs a query for routing information of the called party via the GMSC, and then goes on to send a call establishment request to the network of the terminating side; the network of the terminating side performs a standard procedure processing of the terminating side, and returns a call alerting response to the originating side upon getting contact with UE B, i.e. the called party's terminal, then after the called party's terminal, i.e., the UE B, answers the call, the network of the terminating side returns a call answering response to the originating side to complete the establishment of an initial CS call. Subscriber A at the originating side and subscriber B at the terminating side perform a normal conversation with each other via their own terminals, i.e., UE A and UE B, respectively.

The O-CSI above is added when the subscriber subscribes to an IN service. The O-CSI includes information of triggering condition, a service key and corresponding SCP addresses, and all the information above as well as other CS subscription information of the subscriber are stored in the HLR to which the subscriber belongs, whereas when the subscriber accesses the network via a terminal and trigger a location update procedure thereof, all the information above in the HLR is inserted to the VLR in which the subscriber terminal is currently located.

Controlling a call according to the CPH mode means that, the call is split into two call legs which are interconnected with each other and under the control of one call segment, that is to say, in the MSC/SSP in which the UE A is located, the call established between the UE A and the UE B corresponds to two call legs corresponding to the UE A and the UE B respectively, and the two call legs are located in one call segment and are interconnected with each other.

Step 202: the UE A initiates a transfer toward the SCP.

In the embodiment, the transfer source connection point of a transfer side subscriber initiates a transfer through a request to the network, which specifically includes: first, when the UE A accesses the IMS network and completes an IMS registration, the IMS module in the UE A informs the CS module in the UE A through interactive information among internal modules of the terminal, or in a manner in which the IMS module and the CS module visit a shared data module successively. And when the CS module in the terminal determines that the pre-configured condition is met, the IMS module in the UE A sends a transfer request to the SCP in manner of Unstructured Supplementary Service Data (USSD).

Brief description of the USSD is given hereinafter. The USSD is a supplementary service introduced in the GSM phase 2, which supports a subscriber terminal or the network side to initiate a USSD operation. Similar to a short message, the USSD operation can be sent during a call, while the difference from the short message is that, the USSD is real-time connection oriented, that is to say, during a USSD dialogue, a wireless connection is always maintained to provide a transparent channel, the USSD is transmitted without intermediate step of storing and retransmitting; furthermore, during a USSD dialogue process, multiple continuous USSD operations are supported. The routing of the USSD operations is determined according to the Service Code therein, and the entities capable of providing USSD applications will parse the service data therein and perform a handling and responding according to service logic. With USSD operations, operators can work out appropriate applications to satisfy the demands from their subscribers.

In addition, multiple manners may be adopted to initiate the above transfer, and four specific manners are hereinafter described.

The first manner, i.e., the manner adopted in the embodiment, is that, when a UE determines, according to network coverage conditions, or a pre-configured strategy, or a subscriber instruction, that a transfer condition is met, the subscriber sends a transfer request to the SCP in this embodiment, via the terminal or access mode used before the transfer, i.e. the transfer source connection point.

The second manner is that, when determining the transfer condition is met according to a strategy pre-configured by an operator or a subscriber, for example, coming to the time pre-configured or duration of the conversation coming to the length pre-configured, the SCP in this embodiment directly determines to initiate a transfer. Meanwhile, the SCP can further notify the subscriber that a transfer is about to take place by controlling the SSP/SRF to play announcement to the subscriber.

The next two manners can be summed up as the following: the SCP in this embodiment directly initiates a transfer when receiving an event notification related to the transfer and further determining that the transfer condition is met according to a strategy pre-configured by an operator or a subscriber. And the only difference is that the manner to receive the event notification related to the transfer is different, and the detailed description is given hereinafter.

The third manner is that, the subscriber sends to the network an event notification related to the transfer through the terminal or access mode used before the transfer, for example, the subscriber requests a transfer or the subscriber has already completed the IMS registration etc.; and the SCP directly initiates a transfer upon determining that the transfer condition is met according to the strategy pre-configured by an operator or a subscriber.

The fourth manner is that, the SCP obtains an event notification related to the transfer from a Presence service server in manner of the subscription and notification of a Presence service, for example, when the terminal in the IMS corresponding to the transfer destination connection point completes the IMS registration, service nodes in the IMS which are assigned for the transfer destination connection point notify the Presence service server in manner of the third party registration, and then the Presence service server notifies the SCP of the event according to the subscription. Upon determining that the transfer condition has been met according to the strategy pre-configured by an operator or a subscriber, SCP directly initiates a transfer.

The manners mentioned above can be summed up as the following: the transfer side subscriber terminal sends a request to initiate a transfer upon determining that a transfer condition is met, or a service control entity initiates a transfer upon determining that a transfer condition is met. The situation in which the service control entity initiates a transfer upon determining that that a transfer condition is met can be further divided into the two conditions as following: determining by itself according to the pre-configured condition, or determining upon receiving an event notification related to the transfer. In addition, the service control entity may further send a notification to the transfer side when determining to initiate a transfer. In various transfer-initiating manners, different manners or messages can be adopted in the interaction between the transfer terminal and the network entities such as the service control entity, as well as between the network entities (for example, between the Presence service server and the SCP) in different networks, as long as the same effect can be achieved.

Step 203: the SCP initiates the transfer.

The process specifically includes: upon receiving information transmitted via the USSD operations sent by the UE A, the SCP sends to the MSC/SSP an Initial Call Attempt indication containing an E.164 number corresponding to public identifier of the UE A in the IMS system, i.e., addressing number of the transfer destination connection point; upon receiving the Initial Call Attempt indication, the MSC/SSP analyzes the E.164 number contained therein, then sends a call establishment request to an interworking gateway, i.e., a Media Gateway Control Function (MGCF) between the CS and the IMS, according to the result of the number analysis.

The E.164 number mentioned above, in other words, the addressing number of the transfer destination connection point is related to an MSISDN of the subscriber performing a transfer between different terminals or access modes. Since the MSISDN of the subscriber will be contained in a request message when the subscriber initiates a service request, the service triggering message sent to the SCP by the MSC/SSP will also contain the MSISDN number. The E. 164 number at that time can be deduced by the SCP according to a pre-defined manner from the MSISDN of the subscriber performing a transfer between different terminals or access modes, where the MSISDN is contained in the service triggering message received by the SCP. Alternatively, the E.164 can be contained in the transfer request or transfer event notification sent by the subscriber performing a transfer of terminals mode or access modes, and then sent to the SCP directly.

Furthermore, the manner in which the SCP initiates a call to the interworking gateway MGCF between the CS and the IMS can be that: the call may be directly routed to the MGCF by the MSC/SSP according to networking condition of the CS domain, or may be transmitted by other CS call processing units.

In addition, the MSC/SSP mentioned above can also indicate the particularity of the call by containing a called number with a special number prefix or by containing a special signaling identity in the call establishment request initiated by the MSC/SSP, so as to enable the network entities as well as subscriber terminals involved in the call to perform corresponding special handling according to the indication. The special handling mainly includes: a service collision handling at the terminating side, or ringing avoidance or charging optimization etc. Furthermore, if the call mentioned above is a CS-IMS interworking call as described in the present embodiment, the indication can be further transformed as described in the following Step 204 by the MGCF into corresponding indication in the SIP signaling, and then the IMS network entities involved in the CS-IMS interworking call which is connected to the transfer destination connection point, as well as the subscriber terminal accessing the IMS and corresponding to the transfer destination connection point, can perform above mentioned special handling according to corresponding indication in the SIP signaling.

Step 204: establishing a CS-IMS interworking call, i.e., establishing a new call leg.

The process specifically includes: upon receiving the call establishment request, the MGCF transforms the call establishment request in the CS domain into a session establishment request in the IMS domain according to 3GPP TS 29.163, then sends an IMS session establishment request to the IMS part of the subscriber's terminal via the Call Session Control Function (CSCF) entity in the IMS domain; upon receiving the session establishment request, the IMS part of the subscriber's terminal responds with an IMS session answering response message to the MGCF after a series of interactions related to the IMS session establishment; the MGCF transforms the IMS session answering response message into a CS call answering response message and then sends the CS call answering response message to the MSC/SSP, so as to complete the establishment of the new call leg; and finally the MSC/SSP responds an Initial Call Attempt response to the SCP.

Here, the MSC/SSP establishes a new call connection corresponding to the transfer destination connection point under the control of the SCP, that is to say, establishes a new call connection of the IMS part of the subscriber terminal, i.e., establishes a call leg.

In the process described above, the MGCF can identify that the call is a transferred call according to the E.164 number or other indications in the call establishment request received, and attaches a special indication to the IMS session establishment request initiated by the MGCF. Then the CSCF entities in the IMS domain between the MGCF and the subscriber's terminal, as well as the subscriber's terminal which accesses the IMS and corresponds to the transfer destination connection point, performs special handling such as the collision handling at the called side, or ringing avoidance and charging optimization according to special indications in the SIP signaling.

Step 205: performing a transfer process.

The process specifically includes: the SCP instructs the MSC/SSP to perform operations of moving the call leg, splitting the call leg and releasing the call leg in sequence, so as to complete the voice call transfer of the calling subscriber from the connection point in the CS domain to the connection point in the IMS domain during a CS to CS call.

The operation of moving the call leg refers to that: adding a newly established call leg to a original call segment, so as to enable the newly established call leg, i.e., the call leg corresponding to the UE A (IMS), to be connected to the original CS-CS call, and thus enable the transfer side subscriber to continue conversation with the remote subscriber of the original CS-CS call via the transfer destination connection point, i.e., the UE A (IMS); whereas the operation of splitting the call leg means to split the original call leg corresponding to the transfer source connection point of the transfer side subscriber, i.e., the UE A (CS), from the original call segment, that is to say, make the corresponding transfer source connection point, i.e., the UE A (CS), quit the original CS-CS call, and only the transfer destination connection point of the transfer side subscriber, i.e., the UE A (IMS), connects with the remote subscriber of original CS-CS call, in other words, the two parties communicate with each other; and the operation of releasing the call leg means to release the connection between the MSC/SSP and the transfer source connection point, i.e., the UE A (CS) of the transfer side subscriber.

It should be noted that, the UE A (IMS) above refers to the terminal UE A by which the transfer side subscriber accesses the IMS domain, while the UE A (CS) refers to the terminal UE A by which the transfer side subscriber accesses the CS domain. And, as the present embodiment of the present invention only describes the process of performing a transfer for a call from a CS access mode to an IMS mode via a multi-mode terminal, the above mentioned UE A (IMS) and UE A (CS) refer to the IMS access part and CS access part which are implemented in one terminal equipment.

The description above specifies the process of performing a transfer for a call from the CS access mode of multi-mode terminal of the calling subscriber to the IMS access mode of multi-mode terminal of the calling subscriber during a CS-CS call. In the practical application, since the cost of the multi-mode terminal is very high, whereas the service cost is comparatively low in the WLAN access mode, besides, there exists the demand for a transfer that a terminal in an ongoing conversation may not continue to work. Therefore, the solution above may also transmit the CS call of a subscriber to another terminal of the subscriber, i.e., a WLAN terminal, and continue the conversation with the remote subscriber by accessing the IMS and thus in a VoIP manner. At that time, the interaction within the terminal will become a interaction between different terminals, and the specific interactions between the terminals can be implemented by means of short distance wireless communication, such as a Blue Tooth (BT), or by adopting the third and the fourth manners described in Step 202, in which one of the terminals notifies the network side, and then the network side initiates a transfer. In this case, the above mentioned UE A (IMS) and UE A (CS) actually correspond to two different terminals which respectively access the IMS domain and the CS domain in the transfer process across terminals.

It should be noted that, in Step 203~204 of the present embodiment, the SCP which is served as the service control entity is adopted to provide addressing number pointing to the transfer destination connection point for the MSC/SSP which is served as the call control entity, and then the call control entity is controlled to initiate a call establishment request to the transfer destination connection point according to the addressing number, to establish a new connection. Practically, what should be guaranteed here is to establish a new connection between the call control entity and the transfer destination connection point. If the manner in which the transfer destination connection point initiates the call establishment request and finally establishes the new connection is adopted, the same effect can be achieved.

In addition, in Step 205 of the present embodiment, the manner, in which the SCP served as the service control entity instructs the call control entity MSC/SSP to initiate operations of releasing the call legs, is adopted to release the connection between the call control entity and the transfer source connection point. Likewise, what should be guaranteed here is to release the connection mentioned above; therefore, if the transfer source connection point initiates the call releasing at first, then the MSC/SSP reports to the SCP, and the SCP instructs the MSC/SSP to release the call, therefore releasing the connection finally, the same effect can also be achieved.

The present embodiment described above adopts the IN architecture, utilizing the CPH capability and the Initial Call Attempt capability of the CAMEL phase 4, to implement the transfer for the call from the CS access mode to IMS access mode of the calling subscriber during a CS-CS call. The call above is controlled by the MSC/SSP under the control of the SCP.

From related descriptions about the three kinds of INs above, it can be seen that capabilities supported by the three kinds of INs respectively are more or less the same. Therefore, the method in accordance with the present embodiment can also be implemented in the fixed IN and the CDMA ANSI-41 WIN depending on the respective capability as well as the controlling and interacting process.

In addition, in practical applications, it may exist that the MSC/SSP can not support the CPH capability or the Initial Call Attempt capability, or the MSC can not support the SSP function. At this time, on the one hand, an overlay network manner can be adopted, that is to say, a dedicated MSC/SSP supporting the capability described above is configured in the network, while another MSC which is responsible for processing the services for the transfer side subscriber, may route the call related to the transfer side subscriber to the dedicated MSC/SSP according to its own configurations, and then the dedicated MSC/SSP performs the process in the present embodiment; on the other hand, if the IN architecture is not be adopted, the above function may be implemented instead by adopting a manner in which the MSC, i.e., the exchanges in the mobile network is reconstructed.

Another embodiment is hereinafter given to specifically describe the method of performing a transfer for the calling subscriber terminal from the CS access mode to the IMS access mode under the control of the MSC without adopting the IN architecture, and specifically speaking, the method is as follows.

Step 301: the MSC controls the establishment of an initial call according to an original normal handling manner.

Step 302: initiating a transfer.

The process specifically includes the three manners as follows.

The first manner is that: when determining that a transfer condition has been met according to network coverage situation, a subscriber instruction or a strategy pre-configured by a subscriber, the UE A sends a Facility message containing special information to the MSC, or sends a transfer request to the MSC in manner of USSD; upon receiving the request, the MSC performs the analysis handling.

The Facility message is used for implementing interaction between a subscriber and a network during a call, and the Facility message expresses special information by containing special information elements or containing special contents in the information elements. The expressing manner is not restricted, but defined by operators uniformly, and only needs the supports of the subscriber and the MSC. The USSD is just like the above descriptions, and the UE A can instruct through a service code that the MSC provides the USSD application.

The second manner is that: when determining that the transfer condition has been met, the MSC directly initiates a transfer, and prompts the subscriber terminal UE A by means of playing announcement or a Notify or Facility message.

The third manner is that: the UE A sends an event notification related with the transfer to the MSC through the Facility message containing the special information or in manner of the USSD; and when receiving the notification, and further determining that a transfer condition is met according to a strategy pre-configured by an operator or a subscriber, the MSC initiates a transfer.

Likewise, manners mentioned above can be summed up as follows: the subscriber's terminal at the transfer side determines that the transfer condition is met and sends a request to initiate a transfer, or alternatively, the service control entity (combined with the call control entity as one entity, i.e., the MSC) determines that the transfer condition is met and initiates a transfer. The manner in which the service control entity determines that the transfer condition is met and initiates a transfer can be further divided into two situations: the service control entity determines by itself according to a pre-configured condition, or the service control entity determines that the transfer condition is met upon receiving an event notification related to the transfer. In addition, the service control entity can further send a notification to the transfer side upon determining to initiate the transfer. And, in different networks, different manners or messages may be adopted in the interaction between the transfer side terminal and the service control entity, if only the same effect can be achieved.

Step 303: performing the transfer process.

The MSC, according to the addressing number which points to the transfer destination connection point and which is obtained from subscriber's subscription information, or from the transfer request or the event notification related to the transfer sent by the subscriber, initiates a call establishment request to the connection point corresponding to the addressing number it has obtained, establishes a new connection between the MSC and the transfer destination connection point, then connects the newly established call with the remote subscriber in the active call, and finally releases the connection between the MSC and the transfer source connection point of the subscriber to complete the transfer process.

In above descriptions, when the transfer is a transfer from the CS domain to the IMS domain, the newly established call connection is an interworking call between the CS domain and the IMS domain established via a CS/IMS gateway from the CS domain.

In addition, the MSC can identify that the call is a transferred call by containing a called number with a special number prefix or by containing a special signaling identity in the call establishment request, so as to enable the network entities and subscriber's terminal involved in the call to perform the handling corresponding to the transfer, such as the service collision handling at the terminating side, the ringing avoidance and the charging optimization etc. according to the special indication in the signaling. When the call is an interworking call between the CS domain and the IMS, the above indication can be transformed into corresponding indication in the SIP signaling by the MGCF; then the IMS network entity involved in the CS-IMS interworking call which is connected to the transfer destination connection point, and the subscriber's terminal, which accesses the IMS and corresponds to the transfer destination connection point, can perform the above mentioned special handling according to the corresponding indications in the SIP signaling.

In addition, since the MSC is switching apparatus in the mobile network, the related handling in the present embodiment can be implemented by changing switching apparatus in the PSTN network or changing MSCs in other PLMNs (including the PLMN based on the GSM, or the WCDMA, or the CDMA IS-95 or CDMA 2000 1X). Demands for supporting the transfer for a CS call connection as well as demands for guaranteeing call continuity can also be met.

In a word, the descriptions above are only preferred embodiments of the present invention.

## Claims

1. A method for performing a transfer for a Circuit Switched, CS, call connection, **characterized by** comprising:
performing, by a CS network service control entity, interactions of service triggering and service control with a CS network call control entity upon receiving a service triggering request, and instructing the CS network call control entity to proceed with call processing to establishing an initial CS call connection between a transfer source connection point of a transfer side subscriber and a connection point of a remote subscriber via the CS network call control entity, wherein the CS network call control entity controls the call in a Call Party Handling, CPH, mode, and the service triggering request is sent by the CS network call control entity to the CS network service control entity after the CS network call control entity receives a call establishment request from or pointing to the transfer side subscriber;
sending, by the CS network service control entity, an addressing number pointing to a transfer destination connection point of the transfer side subscriber to the CS network call control entity through an Initial Call Attempt message, instructing the CS network call control entity to establish a new call connection with the transfer destination connection point, wherein the CS network call control entity establishes the new call connection with the transfer destination connection point of the transfer side subscriber according to the addressing number contained in the Initial Call Attempt message upon receiving the Initial Call Attempt message issued by the CS network service control entity, and responding an Initial Call Attempt response;
instructing, by the CS network service control entity, the CS network call control entity to connect the new call connection established between the CS network call control entity and the transfer destination connection point to the initial CS call connection through operations of moving a call leg upon receiving the Initial Call Attempt response, so as to connect the transfer destination connection point with the connection point of the remote subscriber in the initial CS call connection; and
instructing, by the CS network service control entity, the CS network call control entity to remove the call connection with the transfer source connection point from the initial CS call connection and release the call connection between the CS network call control entity and the transfer source connection point by the operations of splitting the call leg and releasing the call leg, thereby maintaining continuity of conversation between the transfer side subscriber and the remote subscriber.

2. The method of Claim 1, wherein the transfer source connection point and the transfer destination connection point are two subscriber terminals of the transfer side subscriber accessing a CS network and an Internet Protocol Multimedia Subsystem, IMS, respectively; or the transfer source connection point and the transfer destination connection point are embodied in one subscriber terminal and access the CS network and the IMS respectively; and
the new call connection established between the CS network call control entity and the transfer destination connection point is an interworking call from the CS network to the IMS via a Media Gateway Control Function, MGCF, /IM-Media Gateway, IM-MGW.

3. The method of Claim 1 or 2, further comprising:
before the process of sending the addressing number pointing to the transfer destination connection point of the transfer side subscriber to the CS network call control entity,
obtaining, by the CS network service control entity, the addressing number pointing to the transfer destination connection point of the transfer side subscriber.

4. The method of Claim 3, wherein the process of obtaining the addressing number pointing to the transfer destination connection point of the transfer side subscriber comprises:
sending, by the transfer source connection point, a transfer request to the CS network service control entity upon determining that current wireless signal strength of the network connection is lower than a preset value or determining that the transfer source connection point can not continue to work; or
sending, by the transfer source connection point, the transfer request to the CS network service control entity according to an instruction from a subscriber; and
obtaining, by the CS network service control entity, the addressing number pointing to the transfer destination connection point from the received transfer request.

5. The method of Claim 4, wherein the process of sending the transfer request to the CS network service control entity comprises:
sending, by the transfer source connection point, the transfer request to the CS network service control entity in manner of Unstructured Supplementary Service Data, USSD; or
sending, by the transfer source connection point, the transfer request to the CS network service control entity through a Facility message.

6. The method of Claim 3, wherein the process of obtaining the addressing number pointing to the transfer destination connection point of the transfer side subscriber comprises:
obtaining, by the CS network service control entity, the addressing number pointing to the transfer destination connection point of the transfer side subscriber from subscriber subscription information stored in the CS network service control entity upon determining that a transfer condition is met according to a pre-configured strategy.

7. The method of Claim 6, further comprising:
controlling, by the CS network service control entity, the CS network call control entity to play transfer prompt announcement to the transfer source connection point; or
sending, by the CS network service control entity, transfer prompt information to the transfer source connection point through a Notify message or a Facility message.

8. The method of Claim 3, wherein the process of obtaining the addressing number pointing to the transfer destination connection point of the transfer side subscriber comprises:
receiving, by the CS network service control entity, a transfer related event notification from the transfer side subscriber, and obtaining the addressing number pointing to the transfer destination connection point of the transfer side subscriber from a transfer related event notification received.

9. The method of Claim 8, wherein the transfer related event notification comprises:
the transfer related event notification sent from the transfer source connection point of the transfer side subscriber to the CS network service control entity in manner of USSD or through a Facility message; or
the transfer related event notification received by the CS network service control entity in manner of a Presence service subscription and notification.

10. The method of Claim 1, wherein the new call connection established between the CS network call control entity and the transfer destination connection point is established by the CS network call control entity in a process comprising:
sending, by the CS network call control entity, a call establishment request message to the transfer destination connection point according to the addressing number pointing to the transfer destination connection point, wherein
the call establishment request message contains a called number with a special number prefix indicating that the call connection is a transferred call connection, or contains a signaling identification indicating that the call connection is a transferred call connection and the method further comprises:
performing, by network entities involved in the call connection, the service collision handling at the terminating side, or charging optimization, or performing, by subscriber terminals involved in the call connection, ringing avoidance, according to the special number prefix or signaling identification during the process of establishing the new call connection between the CS network call control entity and the transfer destination connection point of the transfer side subscriber.

11. The method of Claim 10, wherein the process of establishing the new call connection further comprises:
establishing an interworking call from the CS network to the IMS through an Media Gateway Control Function, MGCF, / IM-Media Gateway, IM-MGW;
transforming, by the MGCF, the special number prefix or signaling identification into an indication in the Session Initiation Protocol, SIP, signaling, wherein:
the network entities involved in the call connection perform the service collision handling at the terminating side, or charging optimization, or subscriber terminals involved in the call connection perform ringing avoidance, according to the indication in the SIP signaling during the process of establishing the new call connection between the CS network call control entity and the transfer destination connection point of the transfer side subscriber.

12. The method of Claim 1, wherein the CS network service control entity is a Service Control Point, SCP, in an Intelligent Network, IN, and the CS network call control entity is a Service Switching Point, SSP, responsible for triggering IN services of the transfer side subscriber; or
the CS network service control entity and the CS network call control entity both are switching apparatus in which the transfer source connection point of the transfer side subscriber is currently located.

13. The method of Claim 1, wherein the service triggering request is sent by the CS network call control entity to the CS network service control entity according to Customized Applications for Mobile network Enhanced Logic, CAMEL, subscription information of the transfer side subscriber.

14. A system for performing a transfer for a Circuit Switched, CS, call connection, comprising:
a CS network service control entity and a CS network call control entity;
**characterized in that**,
the CS network service control entity is adapted to perform interactions of service triggering and service control with the CS network call control entity upon receiving a service triggering request, and to instruct the CS network call control entity to proceed with call processing, send an addressing number pointing to a transfer destination connection point of the transfer side subscriber to the CS network call control entity through an Initial Call Attempt message, instruct the CS network call control entity to establish a new call connection with the transfer destination connection point, instruct the CS network call control entity to connect the new call connection established between the CS network call control entity and the transfer destination connection point to the initial CS call connection through operations of moving a call leg upon receiving the Initial Call Attempt response, so as to control the CS network call control entity to connect the transfer destination connection point with a connection point of a remote subscriber in an initial CS call connection, and instruct the CS network call control entity to remove the call connection with the transfer source connection point from the initial CS call connection and to release the call connection between the CS network call control entity and the transfer source connection point by the operations of splitting the call leg and releasing the call leg;
the CS network call control entity is adapted to send the service triggering request to the CS network service control entity after receiving a call establishment request from or pointing to the transfer side subscriber, controls the call in a Call Party Handling, CPH, mode, establish the initial CS call connection between the transfer source connection point of the transfer side subscriber and the connection point of the remote subscriber via the CS network call control entity; and establish a new call connection with the transfer destination connection point of the transfer side subscriber according to the addressing number contained in the Initial Call Attempt message upon receiving the Initial Call Attempt message issued by the CS network service control entity, and respond an Initial Call Attempt response, connect the transfer destination connection point with the connection point of the remote subscriber in the initial CS call connection, remove the call connection with the transfer source connection point from the initial CS call connection, and release the call connection between CS network call control entity and the transfer source connection point under the control of the CS network service control entity, thereby maintaining continuity of conversation between the transfer side subscriber and the remote subscriber.

15. The system of Claim 14, wherein the CS network call control entity is a Mobile Switching Center/Service Switching Point, MSC/SSP, and the CS network service control entity is a Service Control Point, SCP, in a Mobile Intelligent Network, IN.

16. The system of Claim 15, wherein the MSC/SSP is a Visited Mobile Switch Center/Service Switching Point, VMSC/SSP, in which a calling subscriber terminal is currently located in a targeted network manner, or a Gateway Mobile Switching Center/Service Switching Point, GMSC/SSP, obtaining a roaming number for a called subscriber terminal in the targeted network manner, or a dedicated MSC/SSP in an overlay network manner.

17. The system of Claim 14, wherein the CS network service control entity is a Service Control Point, SCP, in an IN, and the CS network call control entity is a Service Switching Point, SSP, responsible for triggering IN services of the transfer side subscriber; or
the CS network service control entity and the CS network call control entity both are switching apparatus in which the transfer source connection point of the transfer side subscriber is currently located.

18. The system of Claim 14, wherein the service triggering request is sent by the CS network call control entity to the CS network service control entity according to Customized Applications for Mobile network Enhanced Logic, CAMEL, subscription information of the transfer side subscriber.

## Patentansprüche

1. Verfahren zum Durchführen einer Umlegung für eine leitungs-vermittelte bzw. CS-Anrufverbindung, **gekennzeichnet durch** die folgenden Schritte:
eine CS-Netz-Dienststeuerentität führt beim Empfang einer Dienst-Triggerungs-anforderung Interaktionen der Diensttriggerung und Dienststeuerung mit einer CS-Netz-Anrufsteuerentität **durch** und weist die CS-Netz-Anrufsteuerentität an, mit der Anrufbearbeitung fortzufahren, um über die CS-Netz-Anrufsteuerentität eine anfängliche CS-Anrufverbindung zwischen einem Umlegungs-Quellenverbindungs-punkt eines umlegungsseitigen Teilnehmers und einem Verbindungs-punkt eines fernen Teilnehmers herzustellen, wobei die CS-Netz-Anrufsteuerentität den Anruf in einem Modus des Call Party Handling bzw. CPH steuert und die Dienst-Triggerungs-anforderung **durch** die CS-Netz-Anrufsteuerentität zu der CS-Netz-Dienststeuerentität gesendet wird, nachdem die CS-Netz-Anrufsteuerentität eine von dem umlegungsseitigen Teilnehmer kommende oder auf diesen zeigende Anrufherstellungsanforderung empfängt;
die CS-Netz-Dienststeuerentität sendet eine Adressierungsnummer, die auf einen Umlegungs-Zielverbindungs punkt des umlegungsseitigen Teilnehmers zeigt, **durch** eine Anfangs-Anrufversuchnachricht zu der CS-Netz-Anrufsteuerentität, die CS-Netz-Anrufsteuerentität wird angewiesen, eine neue Anrufverbindung mit dem Umlegungs-Zielverbindungspunkt herzustellen, wobei die CS-Netz-Anrufsteuerentität beim Empfang der **durch** die CS-Netz-Dienststeuerentität ausgegebenen Anfangs-Anrufversuchnachricht gemäß der in der Anfangs-Anrufversuchnachricht enthaltenen Adressierungsnummer eine neue Anrufverbindung mit dem Umlegungs-Zielverbindungspunkt des umlegungsseitigen Teilnehmers herstellt, und es wird mit einer Anfangs-Anrufversuchsantwort geantwortet;
die CS-Netz-Dienststeuerentität weist die CS-Netz-Anrufsteuerentität an, die zwischen der CS-Netz-Anrufsteuerentität und dem Umlegungs-Zielverbindungs-punkt hergestellte neue Anrufverbindung **durch** Operationen des Verschiebens eines Anrufabschnitts beim Empfang der Anfangs-Anrufversuchsantwort mit der anfänglichen CS-Anrufverbindung zu verbinden, um so den Umlegungs-Zielverbindungs-punkt mit dem Verbindungs-punkt des fernen Teilnehmers in der anfänglichen CS-Anrufverbindung zu verbinden; und
die CS-Netz-Dienststeuerentität weist die CS-Netz-Anrufsteuerentität an, die Anrufverbindung mit dem Umlegungs-Quellenverbindungs-punkt von der anfänglichen CS-Anrufverbindung zu entfernen und die Anrufverbindung zwischen der CS-Netz-Anrufsteuerentität und dem Umlegungs-Quellenverbindungs-punkt **durch** Operationen des Abtrennes des Anrufabschnitts und Freigebens des Anrufabschnitts freizugeben, wodurch Kontinuität des Gesprächs zwischen dem umlegungsseitigen Teilnehmer und dem fernen Teilnehmer aufrechterhalten wird.

2. Verfahren nach Anspruch 1, wobei der Umlegungs-Quellen-verbindungs-punkt und der Umlegungs-Zielverbindungs-punkt zwei Teilnehmerendgeräte des umlegungsseitigen Teilnehmers sind, die auf ein CS-Netz bzw. ein Internet Protocol Multimedia Subsystem bzw. IMS zugreifen; oder der Umlegungs-Quellen-verbindungs-punkt und der Umlegungs-Zielverbindungs-punkt in einem Teilnehmerendgerät realisiert sind und auf das CS-Netz bzw. das IMS-Netz zugreifen; und
die zwischen der CS-Netz-Anrufsteuerentität und dem Umlegungs-Zielverbindungs-punkt hergestellte neue Anrufverbindung ein Interworking-Anruf von dem CS-Netz zu dem IMS über eine Media Gateway Control Function bzw. MGCF / das IM-Media Gateway bzw. IM-MGW ist.

3. Verfahren nach Anspruch 1 oder 2, ferner mit dem folgenden Schritt:
vor dem Prozess des Sendens der Adressierungs-nummer, die auf den Umlegungs-Zielverbindungs-punkt des umlegungsseitigen Teilnehmers zeigt, zu der CS-Netz-Anrufsteuerentität,
Erhalten der Adressierungsnummer, die auf den Umlegungs-Zielverbindungs-punkt des umlegungsseitigen Teilnehmers zeigt, durch die CS-Netz-Dienststeuerentität.

4. Verfahren nach Anspruch 3, wobei der Prozess des Erhaltens der Adressierungsnummer, die auf den Umlegungs-Zielverbindungs-punkt des umlegungsseitigen Teilnehmers zeigt, Folgendes umfasst:
der Umlegungs-Quellenverbindungs-punkt sendet eine Umlegungs-anforderung zu der CS-Netz-Dienststeuer-entität, wenn bestimmt wird, dass die aktuelle Stärke des drahtlosen Signals der Netzverbindung kleiner als ein voreingestellter Wert ist oder bestimmt wird, dass der Umlegungs-Quellenverbindungs-punkt nicht weiter arbeiten kann; oder
der Umlegungs-Quellenverbindungs-punkt sendet die Umlegungsanforderung zu der CS-Netz-Dienststeuerentität gemäß einer Anweisung von einem Teilnehmer; und
die CS-Netz-Dienststeuerentität erhält die Adressierungsnummer, die auf den Umlegungs-Zielverbindungs-punkt zeigt, aus der empfangenen Umlegungs-anforderung.

5. Verfahren nach Anspruch 4, wobei der Prozess des Sendens der Umlegungsanforderung zu der CS-Netz-Dienststeuerentität Folgendes umfasst:
der Umlegungs-Quellenverbindungs-punkt sendet die Umlegungsanforderung zu der CS-Netz-Dienststeuerentität auf die Weise der Unstructured Supplementary Service Data bzw. USSD; oder
der Umlegungs-Quellenverbindungs-punkt sendet die Umlegungsanforderung zu der CS-Netz-Dienststeuerentität durch eine Facility-Nachricht.

6. Verfahren nach Anspruch 3, wobei der Prozess des Erhaltens der Adressierungsnummer, die auf den Umlegungs-Zielverbindungspunkt des umlegungsseitigen Teilnehmers zeigt, Folgendes umfasst:
die CS-Netz-Dienststeuerentität erhält die Adressierungsnummer, die auf den Umlegungs-Zielverbindungs-punkt des umlegungsseitigen Teilnehmers zeigt, aus in der CS-Netz-Dienststeuerentität gespeicherten Teilnehmersubskriptionsinformationen, wenn bestimmt wird, dass eine Umlegungsbedingung gemäß einer vorkonfigurierten Strategie erfüllt ist.

7. Verfahren nach Anspruch 6, ferner mit den folgenden Schritten:
die CS-Netz-Dienststeuerentität steuert die CS-Netz-Anrufsteuerentität, um dem Umlegungs-Quellen-verbindungs-punkt eine Umlegungsaufforderungsansage abzuspielen; oder
die CS-Netz-Dienststeuerentität sendet durch eine Notify-Nachricht oder eine Facility-Nachricht Umlegungs-auf-forderungs-informationen zu dem Umlegungs-Quellenverbindungs-punkt.

8. Verfahren nach Anspruch 3, wobei der Prozess des Erhaltens der Adressierungsnummer, die auf den Umlegungs-Zielverbindungs-punkt des umlegungsseitigen Teilnehmers zeigt, Folgendes umfasst:
die CS-Netz-Dienststeuerentität empfängt eine umlegungsbezogene Ereignisbenachrichtigung von dem umlegungsseitigen Teilnehmer und die Adressierungs-nummer, die auf den Umlegungs-Zielverbindungs-punkt des umlegungsseitigen Teilnehmers zeigt, wird aus einer empfangenen umlegungsbezogenen Ereignisbenachrichtigung erhalten.

9. Verfahren nach Anspruch 8, wobei die umlegungsbezogene Ereignisbenachrichtigung Folgendes umfasst:
die umlegungsbezogene Ereignisbenachrichtigung, die auf die Weise der USSD oder durch eine Facility-Nachricht von dem Umlegungs-Quellenverbindungs-punkt des umlegungsseitigen Teilnehmers zu der CS-Netz-Dienststeuerentität gesendet wird; oder
die umlegungsbezogene Ereignisbenachrichtigung, die durch die CS-Netz-Dienststeuerentität auf die Weise einer Präsenzdienst-Subskription und - Benachrichtigung empfangen wird.

10. Verfahren nach Anspruch 1, wobei die zwischen der CS-Netz-Anrufsteuerentität und dem Umlegungs-Zielverbindungs-punkt hergestellte neue Anrufverbindung durch die CS-Netz-Anrufsteuerentität in einem Prozess hergestellt wird, der Folgendes umfasst:
die CS-Netz-Anrufsteuerentität sendet eine Verbindungsherstellungs-Anforderungsnachricht zu dem Umlegungs-Zielverbindungs-punkt gemäß der Adressierungsnummer, die auf den Umlegungs-Zielverbindungs-punkt zeigt, wobei
die Verbindungsherstellungs-Anforderungsnachricht eine angerufene Nummer mit einer speziellen Nummernvorwahl enthält, die angibt, dass die Anrufverbindung eine umgelegte Anrufverbindung ist, oder eine Signalisierungsidentifikation enthält, die angibt, dass die Anrufverbindung eine umgelegte Anrufverbindung ist; und das Verfahren ferner die folgenden Schritte umfasst:
gemäß der speziellen Vorwahl oder Signalisierungsidentifikation während des Prozesses des Herstellens der neuen Anrufverbindung zwischen der CS-Netz-Dienststeuerentität und dem Umlegungs-Zielverbindungs-punkt des umlegungsseitigen Teilnehmers führen an der Anrufverbindung beteiligte Netzentitäten die Dienstkollisionsbehandlung auf der Abschlussseite oder die Gebührenberechungsoptimierung durch oder führen an der Anrufverbindung beteiligte Teilnehmerend-geräte Tonrufvermeidung durch.

11. Verfahren nach Anspruch 10, wobei der Prozess des Herstellens der neuen Anrufverbindung ferner Folgendes umfasst:
es wird ein Interworking-Anruf von dem CS-Netz zu dem IMS über eine Media Gateway Control Function bzw. MGCF / das IM-Media Gateway bzw. IM-MGW hergestellt;
die MGCF verwandelt die spezielle Vorwahl oder Signalisierungsidentifikation in eine Indikation in der Signalisierung des Session Initiation Protocol bzw. SIP, wobei gemäß der Indikation in der SIP-Signalisierung während des Prozesses des Herstellens der neuen Anrufverbindung zwischen der CS-Netz-Dienststeuerentität und dem Umlegungs-Zielverbindungs-punkt des umlegungsseitigen Teilnehmers die an der Anrufverbindung beteiligten Netzentitäten die Dienstkollisionsbehandlung auf der Abschlussseite oder die Gebührenberechungsoptimierung durchführen oder an der Anrufverbindung beteiligte Teilnehmerendgeräte Tonrufvermeidung durchführen.

12. Verfahren nach Anspruch 1, wobei die CS-Netz-Dienststeuerentität ein Service Control Point bzw. SCP in einem Intelligent Network bzw. IN ist und die CS-Netz-Anrufsteuerentität ein Service Switching Point bzw. SSP ist, der für das Triggern von IN-Diensten des umlegungsseitigen Teilnehmers verantwortlich ist; oder
die CS-Netz-Dienststeuerentität und die CS-Netz-Anrufsteuerentität beide Vermittlungsvorrichtungen sind, in denen sich der Umlegungs-Quellenverbindungs-punkt des umlegungsseitigen Teilnehmers gerade befindet.

13. Verfahren nach Anspruch 1, wobei die CS-Netz-Anrufsteuerentität die Dienst-Triggerungsanforderung gemäß den Subskriptionsinformationen der Customized Applications for Mobile network Ehanced Logic bzw. CAMEL des umlegungsseitigen Teilnehmers zu der CS-Netz-Dienststeuerentität sendet.

14. System zum Durchführen einer Umlegung für eine leitungsvermittelte bzw. CS-Anrufverbindung, umfassend:
eine CS-Netz-Dienststeuerentität und eine CS-Netz-Anrufsteuerentität;
**dadurch gekennzeichnet, dass**
die CS-Netz-Dienststeuerentität dafür ausgelegt ist, beim Empfang einer Dienst-Triggerungsanforderung Interaktionen der Diensttriggerung und Dienststeuerung mit der CS-Netz-Anrufsteuerentität durchzuführen und die CS-Netz-Anrufsteuerentität anzuweisen, mit der Anrufbearbeitung fortzufahren, eine Adressierungs-nummer, die auf einen Umlegungs-Zielverbindungs-punkt des umlegungsseitigen Teilnehmers zeigt, durch eine Anfangs-Anrufversuchnachricht zu der CS-Netz-Anrufsteuerentität zu senden, die CS-Netz-Anrufsteuerentität anzuweisen, eine neue Anrufverbindung mit dem Umlegungs-Zielverbindungs-punkt herzustellen, die CS-Netz-Anrufsteuerentität anzuweisen, die zwischen der CS-Netz-Anrufsteuerentität und dem Umlegungs-Zielverbindungs-punkt hergestellte neue Anrufverbindung durch Operationen des Verschiebens eines Anrufabschnitts beim Empfang der Anfangs-Anrufversuchsantwort mit der anfänglichen CS-Anrufverbindung zu verbinden, um so den Umlegungs-Zielverbindungs-punkt mit einem Verbindungs-punkt eines fernen Teilnehmers in einer anfänglichen CS-Anrufverbindung zu verbinden, und die CS-Netz-Anrufsteuerentität anzuweisen, die Anrufverbindung mit dem Umlegungs-Quellenverbindungs-punkt von der anfänglichen CS-Anrufverbindung zu entfernen und die Anrufverbindung zwischen der CS-Netz-Anrufsteuerentität und dem Umlegungs-Quellenverbindungs-punkt durch die Operationen des Abtrennens des Anrufabschnitts und Freigebens des Anrufabschnitts freizugeben;
die CS-Netz-Anrufsteuerentität dafür ausgelegt ist, die Dienst-Triggerungsanforderung zu der CS-Netz-Dienststeuerentität zu senden, nachdem sie eine von dem umlegungsseitigen Teilnehmer kommende oder auf diesen zeigende Anrufherstellungsanforderung empfängt, den Anruf in einem Modus des Call Party Handling bzw. CPH steuert, die anfängliche CS-Anrufverbindung zwischen einem Umlegungs-Quellenverbindungs-punkt eines umlegungsseitigen Teilnehmers und einem Verbindungs-punkt eines fernen Teilnehmers über die CS-Netz-Anrufsteuerentität hergestellt wird; und eine neue Anrufverbindung mit dem Umlegungs-Zielverbindungs-punkt des umlegungsseitigen Teilnehmers gemäß der in der Anfangs-Anrufversuch-nachricht enthaltenen Adressierungs-nummer beim Empfang der durch die CS-Netz-Dienststeuerentität ausgegebenen Anfangs-Anrufversuchnachricht hergestellt wird und mit einer Anfangs-Anrufversuchsantwort geantwortet wird, der Umlegungs-Zielverbindungs-punkt mit dem Verbindungs-punkt des fernen Teilnehmers in der anfänglichen CS-Anrufverbindung verbunden wird, die Anrufverbindung mit dem Umlegungs-Quellenverbindungs-punkt von der anfänglichen CS-Anrufverbindung entfernt wird und die Anrufverbindung zwischen der CS-Netz-Anrufsteuerentität und dem Umlegungs-Quellenverbindungs-punkt unter der Kontrolle der CS-Netz-Dienststeuerentität freigegeben wird, wodurch Kontinuität des Gesprächs zwischen dem umlegungsseitigen Teilnehmer und dem fernen Teilnehmer aufrechterhalten wird.

15. System nach Anspruch 14, wobei die CS-Netz-Anrufsteuerentität ein Mobile Switching Center/Service Switching Point bzw. MSC/SSP ist und die CS-Netz-Dienststeuerentität ein Service Control Point bzw. SCP in einem Intelligent Network bzw. IN ist.

16. System nach Anspruch 15, wobei der MSC/SSP auf Netzabzielungsweise ein Visited Mobile Switch Center/Service Switching Point bzw. VMSC/SSP, in dem sich ein anrufendes Teilnehmerendgerät gerade befindet, oder auf die Netzabzielungsweise ein Gateway Mobile Switching Center/Service Switching Point bzw. GMSC/SSP, der eine Roamingnummer für ein angerufenes Teilnehmerendgerät erhält, oder auf eine Overlay-Netzweise ein dedizierter MSC/SSP ist.

17. System nach Anspruch 14, wobei die CS-Netz-Dienststeuerentität ein Service Control Point bzw. SCP in einem Intelligent Network bzw. IN ist und die CS-Netz-Anrufsteuerentität ein Service Switching Point bzw. SSP ist, der für das Triggern von IN-Diensten des umlegungsseitigen Teilnehmers verantwortlich ist; oder
die CS-Netz-Dienststeuerentität und die CS-Netz-Anrufsteuerentität beide Vermittlungsvorrichtungen sind, in denen sich der Umlegungs-Quellenverbindungs-punkt des umlegungsseitigen Teilnehmers gerade befindet.

18. System nach Anspruch 14, wobei die die CS-Netz-Anrufsteuerentität die Dienst-Triggerungsanforderung gemäß den Subskriptionsinformationen der Customized Applications for Mobile network Ehanced Logic bzw. CAMEL des umlegungsseitigen Teilnehmers zu der CS-Netz-Dienststeuerentität sendet.

## Revendications

1. Procédé d'exécution d'un transfert d'une connexion d'appel par Commutation de Circuit, CS (Circuit Switched), **caractérisé par le fait qu'**il comprend :
l'exécution, par une entité de commande de service de réseau CS, d'interactions de déclenchement de service et de commande de service avec une entité de commande d'appel de réseau CS lors de la réception d'une requête de déclenchement de service, et l'instruction à l'entité de commande d'appel de réseau CS de poursuivre le traitement d'appel pour établir une connexion d'appel CS initiale entre un point source de connexion de transfert d'un abonné côté transfert et un point de connexion d'un abonné distant par l'intermédiaire de l'entité de commande d'appel de réseau CS, l'entité de commande d'appel de réseau CS commandant l'appel dans un mode de Prise en Charge de Correspondant, CPH (Call Party Handling), et la requête de déclenchement de service étant envoyée par l'entité de commande d'appel de réseau CS à l'entité de commande de service de réseau CS après que l'entité de commande d'appel de réseau CS reçoit une requête d'établissement d'appel depuis ou pointant vers l'abonné côté transfert ;
l'envoi, par l'entité de commande de service de réseau CS, d'un numéro d'adressage pointant vers un point destinataire de connexion de transfert de l'abonné côté transfert à l'entité de commande d'appel de réseau CS par le biais d'un message de Tentative d'Appel Initiale, instruisant l'entité de commande d'appel de réseau CS d'établir une nouvelle connexion d'appel avec le point destinataire de connexion de transfert, l'entité de commande d'appel de réseau CS établissant la nouvelle connexion d'appel avec le point destinataire de connexion de transfert de l'abonné côté transfert en fonction du numéro d'adressage contenu dans le message de Tentative d'Appel Initiale lors de réception du message de Tentative d'Appel Initiale délivré par l'entité de commande de service de réseau CS, et répondant avec une réponse à la Tentative d'Appel Initiale ;
l'instruction, par l'entité de commande de service de réseau CS, à l'entité de commande d'appel de réseau CS de connecter la nouvelle connexion d'appel établie entre l'entité de commande d'appel de réseau CS et le point destinataire de connexion de transfert à la connexion d'appel CS initiale par le biais d'opérations de déplacement d'un tronçon d'appel lors de la réception de la réponse à la Tentative d'Appel Initiale, de façon à connecter le point destinataire de connexion de transfert au point de connexion de l'abonné distant dans la connexion d'appel CS initiale ; et
l'instruction, par l'entité de commande de service de réseau CS, à l'entité de commande d'appel de réseau CS de rompre la connexion d'appel avec le point source de connexion de transfert de la connexion d'appel CS initiale et de libérer la connexion d'appel entre l'entité de commande d'appel de réseau CS et le point source de connexion de transfert par les opérations de division du tronçon d'appel et de libération du tronçon d'appel, maintenant ainsi la continuité de la conversation entre l'abonné côté transfert et l'abonné distant.

2. Procédé selon la revendication 1, dans lequel le point source de connexion de transfert et le point destinataire de connexion de transfert sont deux terminaux d'abonné de l'abonné côté transfert qui sollicitent respectivement un réseau CS et un Sous-Système Multimédia à Protocole Internet, IMS (Internet Multimedia Subsystem), ou le point source de connexion de transfert et le point destinataire de connexion de transfert sont mis en oeuvre dans un seul terminal d'abonné et sollicitent respectivement le réseau CS et l'IMS ; et
la nouvelle connexion d'appel établie entre l'entité de commande d'appel de réseau CS et le point destinataire de connexion de transfert est un appel d'interfonctionnement depuis le réseau CS vers l'IMS par l'intermédiaire d'une Fonction de Commande de Passerelle de Média, MGCF (Media Gateway Control Function) / Passerelle de Média IM, IM-MGW (IM-Media Gateway).

3. Procédé selon la revendication 1 ou 2, comprenant en outre :
avant le processus d'envoi du numéro d'adressage pointant vers le point destinataire de connexion de transfert de l'abonné côté transfert à l'entité de commande d'appel de réseau CS,
l'obtention par l'entité de commande de service de réseau CS, du numéro d'adressage pointant vers le point destinataire de connexion de transfert de l'abonné côté transfert.

4. Procédé selon la revendication 3, dans lequel le processus d'obtention du numéro d'adressage pointant vers le point destinataire de connexion de transfert de l'abonné côté transfert comprend :
l'envoi, par le point source de connexion de transfert, d'une requête de transfert à l'entité de commande de service de réseau CS lorsqu'il est déterminé que la force du signal sans fil courant de la connexion réseau est inférieure à une valeur préétablie ou que le point source de connexion de transfert ne peut pas continuer à travailler ; ou
l'envoi, par le point source de connexion de transfert, de la requête de transfert à l'entité de commande de service de réseau CS en fonction d'une instruction d'un abonné ; et
l'obtention, par l'entité de commande de service de réseau CS, du numéro d'adressage pointant vers le point destinataire de connexion de transfert à partir de la requête de transfert reçue.

5. Procédé selon la revendication 4, dans lequel le processus d'envoi de la requête de transfert à l'entité de commande de service de réseau CS comprend :
l'envoi par le point source de connexion de transfert, de la requête de transfert à l'entité de commande de service de réseau CS sous forme de Données de Service Supplémentaires Non Structurées, USSD (Unstructured Supplementary Service Data) ; ou
l'envoi, par le point source de connexion de transfert, de la requête de transfert à l'entité de commande de service de réseau CS par le biais d'un message de Fonction.

6. Procédé selon la revendication 3, dans lequel le processus d'obtention du numéro d'adressage pointant vers le point destinataire de connexion de transfert de l'abonné côté transfert comprend :
l'obtention, par l'entité de commande de service de réseau CS, du numéro d'adressage pointant vers le point destinataire de connexion de transfert de l'abonné côté transfert à partir d'informations d'abonnement d'abonné stockées dans l'entité de commande de service de réseau CS lorsqu'il est déterminé qu'une condition de transfert est satisfaite conformément à une stratégie préconfigurée.

7. Procédé selon la revendication 6, comprenant en outre :
la commande, par l'entité de commande de service de réseau CS, à l'entité de commande d'appel de réseau CS de lire un message d'invite de transfert à l'intention du point source de connexion de transfert ; ou
l'envoi, par l'entité de commande de service de réseau CS, d'informations d'invite de transfert à l'intention du point source de connexion de transfert par le biais du message de Notification ou d'un message de Fonction.

8. Procédé selon la revendication 3, dans lequel le processus d'obtention du numéro d'adressage pointant vers le point destinataire de connexion de transfert de l'abonné côté transfert comprend :
la réception, par l'entité de commande de service de réseau CS, d'une notification d'événement lié au transfert depuis l'abonné côté transfert, et l'obtention du numéro d'adressage pointant vers le point destinataire de connexion de transfert de l'abonné côté transfert à partir d'une notification d'événement lié au transfert reçue.

9. Procédé selon la revendication 8, dans lequel la notification d'événement lié au transfert comprend :
la notification d'événement lié au transfert envoyée par le point source de connexion de transfert de l'abonné côté transfert à l'entité de commande de service de réseau CS sous forme de USSD ou par le biais d'un message de Fonction ; ou
la notification d'événement lié au transfert reçue par l'entité de commande de service de réseau CS sous forme d'abonnement à un service Présence et de notification.

10. Procédé selon la revendication 1, dans lequel la nouvelle connexion d'appel établie entre l'entité de commande d'appel de réseau CS et le point destinataire de connexion de transfert est établie par l'entité de commande d'appel de réseau CS dans un processus comprenant :
l'envoi, par l'entité de commande d'appel de réseau CS, d'un message de requête d'établissement d'appel au point destinataire de connexion de transfert en fonction du numéro d'adressage pointant vers le point destinataire de connexion de transfert, dans lequel
le message de requête d'établissement d'appel contient un numéro appelé ayant un préfixe de numérotation spécial indiquant que la connexion d'appel est une connexion d'appel transférée, ou contient une identification de signalisation indiquant que la connexion d'appel est une connexion d'appel transférée ; et le procédé comprend en outre :
l'exécution, par des entités de réseau impliquées dans la connexion d'appel, de la prise en charge de la collision de service du côté arrivée, ou d'une optimisation de facturation, ou l'exécution, par les terminaux d'abonné impliqués dans la connexion d'appel, d'un évitement de sonnerie, en fonction du préfixe de numérotation spécial ou de l'identification de signalisation durant le processus d'établissement de la nouvelle connexion d'appel entre l'entité de commande d'appel de réseau CS et le point destinataire de connexion de transfert de l'abonné côté transfert.

11. Procédé selon la revendication 10, dans lequel le processus d'établissement de la nouvelle connexion d'appel comprend en outre :
l'établissement d'un appel d'interfonctionnement depuis le réseau CS vers l'IMS par l'intermédiaire d'une Fonction de Commande de Passerelle de Média, MGCF/Passerelle de Média IM, IM-MGW ;
la transformation, par la MGCF, du préfixe de numérotation spécial ou de l'identification de signalisation en une indication de la signalisation de Protocole de Lancement de Session, SIP (Session Initiation Protocol), où :
les entités de réseau impliquées dans la connexion d'appel exécutent la prise en charge de la collision de service du côté arrivée, ou l'optimisation de facturation, ou les terminaux d'abonné impliqués dans la connexion d'appel exécutent un évitement de sonnerie, selon l'indication dans la signalisation SIP durant le processus d'établissement de la nouvelle connexion d'appel entre l'entité de commande d'appel de réseau CS et le point destinataire de connexion de transfert de l'abonné côté transfert.

12. Procédé selon la revendication 1, dans lequel l'entité de commande de service de réseau CS est un Point de Commande de Service, SCP (Service Control Point), dans un Réseau Intelligent, IN (Intelligent Network), et l'entité de commande d'appel de réseau CS est un Point de Commutation de Service, SSP (Service Switching Point), chargé de déclencher les services IN de l'abonné côté transfert ; ou
l'entité de commande de service de réseau CS et l'entité de commande d'appel de réseau CS sont toutes les deux des appareils de commutation dans lesquels le point source de connexion de transfert de l'abonné côté transfert se trouve actuellement.

13. Procédé selon la revendication 1, dans lequel la requête de déclenchement de service est envoyée par l'entité de commande d'appel de réseau CS à l'entité de commande de service de réseau CS conformément à des informations d'abonnement d'Applications Personnalisées de Logique Rehaussée de réseau Mobile, CAMEL (Customized Applications for Mobile network Enhanced Logic), de l'abonné côté transfert.

14. Système d'exécution d'un transfert d'une connexion d'appel par Commutation de Circuit, CS, comprenant :
une entité de commande de service de réseau CS et une entité de commande d'appel de réseau CS ;
**caractérisé en ce que** ;
l'entité de commande de service de réseau CS est adaptée pour effectuer des interactions de déclenchement de service et de commande de service avec l'entité de commande d'appel de réseau CS lors de la réception d'une requête de déclenchement de service, et pour instruire l'entité de commande d'appel de réseau CS de poursuivre le traitement d'appel, envoyer un numéro d'adressage pointant vers un point destinataire de connexion de transfert de l'abonné côté transfert à l'entité de commande d'appel de réseau CS par le biais d'un message de Tentative d'Appel Initiale, instruire l'entité de commande d'appel de réseau CS d'établir une nouvelle connexion d'appel avec le point destinataire de connexion de transfert, instruire l'entité de commande d'appel de réseau CS de connecter la nouvelle connexion d'appel établie entre l'entité de commande d'appel de réseau CS et le point destinataire de connexion de transfert à la connexion d'appel CS initiale par le biais d'opérations de déplacement d'un tronçon d'appel à la réception de la réponse à la Tentative d'Appel Initiale, de façon à commander à l'entité de commande d'appel de réseau CS de connecter le point destinataire de connexion de transfert à un point de connexion d'un abonné distant dans une connexion d'appel CS initiale, et instruire l'entité de commande d'appel de réseau CS de rompre la connexion d'appel avec le point source de connexion de transfert de la connexion d'appel CS initiale et de libérer la connexion d'appel entre l'entité de commande d'appel de réseau CS et le point source de connexion de transfert par les opérations de division du tronçon d'appel et de libération du tronçon d'appel ;
l'entité de commande d'appel de réseau CS est adaptée pour envoyer la requête de déclenchement de service à l'entité de commande de service de réseau CS après la réception d'une requête d'établissement d'appel depuis ou pointant vers l'abonné côté transfert, commander l'appel dans un mode de Prise en Charge de Correspondant, CPH, établir la connexion d'appel CS initiale entre le point source de connexion de transfert de l'abonné côté transfert et le point de connexion de l'abonné distant par l'intermédiaire de l'unité de commande d'appel de réseau CS ; et établir une nouvelle connexion d'appel avec le point destinataire de connexion de transfert de l'abonné côté transfert en fonction du numéro d'adressage contenu dans le message de Tentative d'Appel Initiale à la réception du message de Tentative d'Appel Initiale délivré par l'entité de commande de service de réseau CS, et répondre avec une réponse à la Tentative d'Appel Initiale, connecter le point destinataire de connexion de transfert au point de connexion de l'abonné distant dans la connexion d'appel CS initiale, rompre la connexion d'appel avec le point source de connexion de transfert de la connexion d'appel CS initiale et libérer la connexion d'appel entre l'entité de commande d'appel de réseau CS et le point source de connexion de transfert sous la commande de l'entité de commande de service de réseau CS, maintenant ainsi la continuité de la conversation entre l'abonné côté transfert et l'abonné distant.

15. Système selon la revendication 14, dans lequel l'entité de commande d'appel de réseau CS est un Centre de Commutation Mobile/Point de Commutation de Service, MSC/SSP, et l'entité de commande de service de réseau CS est un Point de Commande de Service, SCP, dans un Réseau Intelligent, IN, mobile.

16. Système selon la revendication 15, dans lequel le MSC/SSP est un Centre de Commutation Mobile/Point de Commutation de Service Visité, VMSC/SSP (Visited Mobile Switching Center/Service Switching Point), dans lequel un terminal d'abonné appelant se trouve actuellement à la manière d'un réseau ciblé, ou un Centre de Commutation Mobile/Point de Commutation de Service Passerelle, GMSC/SSP (Gateway Mobile Switching Center/Service Switching Point), obtenant un numéro d'itinérance pour un terminal d'abonné appelé à la manière d'un réseau ciblé, ou un MSC/SSP dédié à la manière d'un réseau de recouvrement.

17. Système selon la revendication 14, dans lequel l'entité de commande de service de réseau CS est un Point de Commande de Service, SCP, dans un IN, et l'entité de commande d'appel de réseau CS est un Point de Commutation de Service, SSP, chargé du déclenchement des services IN de l'abonné côté transfert ;
l'entité de commande de service de réseau CS et l'entité de commande d'appel de réseau CS sont toutes les deux des appareils de commutation dans lesquels le point source de connexion de transfert de l'abonné côté transfert se trouve actuellement.

18. Système selon la revendication 14, dans lequel la requête de déclenchement de service est envoyée par l'entité de commande d'appel de réseau CS conformément à des informations d'abonnement d'Applications Personnalisées de Logique Rehaussée de réseau Mobile, CAMEL, de l'abonné côté transfert.
